(19) Europäisches Patentamt
European Patent Office
Office européen des brevets

(11) Numéro de publication: **0 161 999**
**B1**

# (12) FASCICULE DE BREVET EUROPEEN

(45) Date de publication du fascicule du brevet: **04.07.90**

(21) Numéro de dépôt: **85460009.5**

(22) Date de dépôt: **30.04.85**

(51) Int. Cl.[5]: **C 03 B 37/027,**
C 03 B 37/028, C 03 B 37/012,
C 03 B 19/02, C 03 B 19/04,
C 03 C 3/32, C 03 C 13/04

## (54) Procédés de fabrication de fibres et de composants optiques en verres fluorés et appareils destinés à les mettre en oeuvre.

(30) Priorité: **07.05.84 FR 8407181**

(43) Date de publication de la demande:
**21.11.85 Bulletin 85/47**

(45) Mention de la délivrance du brevet:
**04.07.90 Bulletin 90/27**

(84) Etats contractants désignés:
**AT BE CH DE GB IT LI NL SE**

(56) Documents cités:
**DE-A-2 050 209**
**DE-A-2 926 177**
**FR-A-2 249 847**
**FR-A-2 275 415**
**FR-A-2 384 124**
**FR-A-2 417 783**
**GB-A-1 523 595**
**US-A-3 614 197**
**US-A-3 844 752**

**OPTIK, vol. 51, no. 1, juillet 1978, pages 97-99, Wissenschaftliche Verlagsgesellschaft mbH, Stuttgart, DE; P.G. HALE et al.: "Production of optical fibres using a vacuum furnace"**
**PHYSICS AND CHEMISTRY OF GLASSES, vol. 23, no. 6, décembre 1982, pages 196-201, Huddersfield, GB; S. MITACHI et al.:**

(73) Titulaire: **Le verre fluoré S.A.**
**Z.I. du Champ Martin Vern-sur-Seiche**
**F-35230 St Erblon (FR)**

(72) Inventeur: **Maze, Gwenael**
**1, rue de Brilhac**
**F-35000 Rennes (FR)**
Inventeur: **Cardin, Vincent**
**16, Square Perrin**
**F-35000 Rennes (FR)**
Inventeur: **Poulain, Marcel**
**17, Square André Desbois**
**F-35000 Rennes (FR)**

(74) Mandataire: **Le Guen, Louis François**
**CABINET Louis LE GUEN 38, rue Levavasseur**
**B.P. 91**
**F-35802 Dinard Cédex (FR)**

(56) Documents cités:
**"Preparation of fluoride optical fibres for transmission in the mid-infrared"**
**SIXTH TOPICAL MEETING ON OPTICAL FIBER COMMUNICATION, 28 février - 2 mars 1983,**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 161 999 B1**

(56) Documents cités:
New Orleans, Digest of Technical Papers, pages 4-6, IEEE, New York, US; G.H. SIGEL et al.: "Infrared transmitting fluoride glasses: fibers"
SIXTH TOPICAL MEETING ON OPTICAL FIBER COMMUNICATION; 28 Février - 2 Mars 1983, New Orleans, Digest of Technical Papers, p. 6, IEEE, New York, US; D.C. Tran et al : "Minimization of OH-absorption and scattering losses in zirconium fluoride glasses"

## Description

La présente invention concerne des procédés de fabrication de fibres et de composants optiques en verres fluorés à partir de barreaux ou de préformes en verre fluoré.

Etat de la technique

L'utilisation de verres fluorés pour fibres optiques a été suggérée, pour la première fois, dans le brevet FR—A—2 396 981. Dans ce brevet, on a décrit divers procédés d'élaboration de préformes et de fibrage à partir de matéraux fluorés, tels que ceux décrits dans les brevets FR—A—2 354 977 et FR—A—2 384 724. Bien que ces techniques aient été mises en oeuvre avec succès pour l'élaboration de préformes, il s'est avéré que le fibrage ultérieur de celles-ci ne pouvait pas valablement être réalisé dans des conditions conventionnelles, par exemple en utilisant un four à résistance à l'air ambiant. En effet, de nombreuses altérations de surface apparaissaient au moment du fibrage, se localisant sur le cône de striction de la préforme et induisant un grand nombre d'irrégularités le long de la fibre qui est fragile et de diamètre inconstant. Dans ces conditions, on ne peut plus facilement revêtir la fibre d'une gaine de polymère. Etant donnée ses qualités optiques et mécaniques médiocres, la fibre obtenu est pratiquement impropre à toute utilisation industrielle.

Dans les articles intitués "TEFLON FEP-CLAP FLUORIDE GLASS FIBRE" par Mitachi et autres, paru dans la revue techniqu Electronics Letters, pp. 128—129, Vol. 17, n° 3 du 5 février 1981, et "Preparation of fluoride optical fibres for transmission in the mis-infrared" par Mitachi et autres, paru dans Physics and Chemistry of Glasses, pp. 196—201, Vol. 23, n° 6 de décembre 1982, on a décrit des méthodes devant permettre de résoudre ce problème pratique. Pour l'essentiel, la préforme en verre fluoré, comportant un coeur et une gaine d'indice inférieur, est recouverte d'une gaine plastique en polytétrafluoroéthylène. Ce polymère, aux constantes thermiques élevées, est ensuite fibré en même temps que le verre, à une température voisine de 400°C. Dans ces conditions, on évite les phénomènes superficiels décrits ci-dessus et des longueurs importantes de fibres d'un diamètre sensiblement constant ont pu être obtenues.

Malheureusement, ce procédé présente quelques inconvénients. En premier lieu, il suppose que la température de fibrage du verre n'est pas trop différente de celle du polytétrafluoroéthylène. Or, dans le cas de fibrage de verres de fluoroaluminates, fluorozincates, ou encore de verres de fluorozirconates très riches en alcalins, le fibrage devient impossible ou très aléatoire, car ces verres ont des caractéristiques thermique éloignées de celles du tétrafluoroéthylène. Par ailleurs, il impose ce polymère comme gaine de protection de la fibre optique. Ceci constitue un handicap sérieux dans la mesure où il se révèle assez poreux. De ce fait, il laisse diffuser l'humidité ambiante jusqu'à la surface du verre fluoré. La vapeur d'eau se combine alors aux molécules fluorées produites aux moment du fibrage, telle que HF, $CF_4$, $C_2F_6$, et piégées à l'intérieur du revêtement. Au bout d'un laps de temps variable, allant de quelques jours à quelques mois, la fibre perd ses qualité optiques et mécaniques. Elle se révèle moins transparente et excessivement fragile. Son absence de fiabilité lui interdit toute utilisation pratique. Enfin, avec ce procédé, il n'est évidemment pas possible d'obtenir des fibres nues qui sont pourtant des composants ou des produits intermédiaires nécessaires à certaines réalisations.

L'état de la technique est encore illustré par les résumés d'articles intitulés "Infrared transmitting fluoride glasses: fibers" par Sigel et autres, et "Minimization of OH absorption and scattering in zirconium fluoride glasses" par Tran et autres, paru dans "Sixth Topical Meeting on Optical Fiber Communication", 28 février-2 mars 1983, pp. 4—7, IEEE. Dans le premier article cité, on rappelle la méthode de Mitachi mentionnée plus haut. Puis, on fait état de tentatives de fibrages sans gaine plastique, mais avec des pertes importantes par dispersion. Dans le second article, on attire l'attention sur l'effet nocif des hydroxyles et on propose une atmosphère de traitement des verres fluorés contenant $SF_6$, HF, $CCl_4$, $CF_4$ et $NH_4HF_2$. Aucune conclusion définitive n'est donnée.

Analyse des difficultés à surmonter

Ainsi qu'il a été noté précédemment, on rencontre plusieurs difficultés au cours de l'étirage d'un barreau vitreux ou d'une préforme pour fabriquer une fibre aux qualités optiques et mécaniques acceptables. Le premier phénomène dont le mécanisme et l'évolution sont assez bien connus est la recristallisation du verre. Un verre est, par nature, un matériau métastable dont la structure s'apparente à celle d'un liquide figé tandis que l'état thermodynamiquement le plus stable est celui des solides cristallisés dans lesquels la répartition statiale des atomes suit des lois géométriques rigoureuses et aboutit à une périodicité tridimensionnelle. A la température ambiante, les mouvements des atomes résultant de l'agitation thermique ont une ampleur beaucoup trop limitée pour permettre un réarrangement structural conduisant à un mélange de phases cristallisées. En pratique, les temps de relaxation associés sont très élevés tant que la température se situe au-dessous de la transition vitreuse $T_G$. Au-dessus de celle-ci, en revanche, ces temps de relaxation diminuent au point de devenir comparables aux paramètres temporels de l'appareil de fibrage tels que vitesse de chauffe, palier isotherme, etc.

On peut, pour chaque température, définir un temps au terme duquel une fraction donnée du verre sera cristallisée, par exemple $10^{-5}$ ou $10^{-6}$ fois le volume total. L'examen de l'évolution de ce temps caractéristique conduit à des courbes appelées T.T.T., pour Temps-Température-Transformation, qui sont caractéristiques du verre considéré. Comme le fibrage doit nécessairement s'effectuer à une température

où la viscosité est convenable, c'est-à-dire 1000 à 10 000 poises, on si situe nécessairement à une température où le temps caractéristique a une valeur finie, parfois très coutre. Pour certains verres flourés, tels que le verre de composition 60 $ZrF_4$—40 Ba $F_2$, ce temps n'est que de quelques secondes, ce qui rend le fibrage a priori quasi impossible. Pour des verres fluorés plus stables, par exemple ceux qui contiennent La, Zr, Ba, Al, ce temps peut être de plusieurs minutes et même davantage. Une condition essentielle d'un fibrage satisfaisant est ainsi que le temps de chauffage du verre à la température de fibrage soit sensiblement inférieur au temps de cristallisation à cette température.

Il convient de noter que les considérations ci-dessus ne concernent que la recristallisation de type homogène que ne dépend que de la composition du verre. Dans les conditions expérimentales réelles, on observe d'autres phénomènes de dévitrification qui sont liés à des mécanismes différents, dits hétérogènes.

La réactivité particulière des fluorures à température élevée est un phénomène bien connu qui se traduit, par exemple, par des corrosions ou des pollutions. Dans le cas des verres fluorés, c'est la surface qui constitue le lieu critique des principaux phénomènes chimiques affectant les propriétés physiques du verre. Si l'on restreint l'analyse aux réactions entre phases solide et gazeuse, il apparaît que des gaz tels que l'azote $N_2$ ou l'oxygène $O_2$ n'induisent pas de transformations chimiques décelables. Par contre, la vapeur d'eau se révèle particulièrement corrosive. Le schéma réactionnel peut s'écrire sous deux formes différentes:

$$MF_n+H_2O \rightarrow MF_{n-1}OH+HF \quad (1)$$

$$MF_n+H_2O \rightarrow MF_{n-2}O+2\ HF \quad (2)$$

Dans le premier cas, un fluor est remplacé isostructuralement par un hydroxyle $OH^-$ d'encombrement similaire. Dans le second cas, deux fluors sont échangés avec un oxygène, ce qi implique une modification sensible de la structure. Dans tous les cas, l'attaque de l'eau se traduit par l'incorporation d'oxygène dans le matériau fluoré. Ce phénomène est général et se produit aussi bien avec les fluorures cristallisés qu'avec les verres. Une approche thermodynamique simple confirmée par l'observation expérimentale montre que la réaction (1) est prépondérante à basse température tandis que la réaction (2) survient préférentiellement à plus haute température, notmment lorsque les fluorures sont à l'état liquide. Cette modification chimique, induite à partir de la surface, entraîne des conséquences importantes. Les propriétés optiques sont affectées et, en particulier, on observe une bande d'absorption à 2,9 microns. L'indice de réfraction varie légèrement. En effet, la polarisabilité de $OH^-$ est différente de celle de $F^-$. La dévitrification étant en étroite corrélation avec la composition, l'incorporation d'oxygène accélère habituellement la vitesse de cristallisation d'autant plus qu'à un certain stade de l'hydrolyse, des oxyfluorures sont engendrés et se comportent alors comme des germes de cristallisation hétérogènes. Les liaisons métal-oxygène sont plus fortes que les liaisons métal-fluor, ce qui tend à augmenter localement la viscosité de la phase liquide et à créer des microdomaines riches en oxygène et plus denses qui vont ultérieurement être à l'origine d'une diffusion intense.

Dans certaines conditions, ces microdomaines sont susceptibles de se rassembler pour former à la surface du verre une phase quasi homogène aux propriétés physiques sensiblement différentes de celles du verre fluoré de base. Cette nouvelle phase superficielle se comporte comme un verre aux températures caractéristiques supérieures. De ce fait sa viscosité est toujours supérieur à celle du verre dont il est issu. Cette séparation de phase aboutit ainsi à la formation d'une "peau" à la surface du verre. Au lieu d'observer la surface lisse résultant ou "poli au feu", on note l'apparition de plissures, zébrures et autres rugosités. Lors de l'étirage de barreaux ou de préformes en fibres optiques, le cône de striction présente une "jupe" caractéristique dont la dislocation entraîne de nombreux défauts le long de la fibre, c'est-à-dire bourrelets, rétrécissements et dépôts irréguliers. Ces défauts engendrent des contraintes mécaniques importantes au refroidissement et la fibre se révèle fragile et cassante.

Cette séparation de phase, dont les conséquences apparaissent ainsi désastreuses pour l'élaboration de fibres optiques, est régie par plusieurs facteurs. En premier lieu, l'attaque par l'humidité, qui augmente continûment la concentration en oxygène, constitue un paramètre prépondérant. En effet, le phénomène est lié au nombre de microdomaines plus riches en oxygène. Par ailleurs, le rassemblement de ces microdomaines en une couche superficielle quasi homogène semble être favorisé et accéléré par les impuretés extérieures à la phase vitreuse, telles que les poussières diverses, les molécules organiques, silice et silicates, oxydes, vapeurs métalliques, carbone et carbures. Ainsi, les facteurs extérieurs au verre, tels que atmosphère, humidité, poussières, se révèlent aussi critiques que les caractéristiques du verre lui-même qui sont la pureté cationique, la concentration en oxygène et $OH^-$, la vitesse de nucléation homogène et la viscosité.

Un dernier problème et non le moindre est celui de la résistance chimique et mécanique de la fibre. On a, par exemple, observé que des molécules d'eau de l'atmosphère viennet se fixer à la surface des pièces de verres fluorés. Ce phénomène se traduit encore par une absorption optique à 2,9 microns. En solution aqueuse, cette fixation est encore plus importante et conduit rapidement à une dégradation de la surface du verre dont certains constituants passent en solution. La détérioration de l'état de surface entraîne une fragilisation extrême des fibres que résistent alors très mal aux efforts résultant de tractions, courbures et vibrations.

Objet de l'invention

Un objet de l'invention consiste à prévoir un procédé permettant de réduire sensiblement les effets des inconvénients mentionnés ci-dessus, en résolvant l'ensemble des problèmes soulevés par l'élaboration de fibres de qualité convenable.

Cet objet de l'invention est atteint par la mise en oeuvre du procédé défini dans la revendication 1. Des mesures préférentielles sont indiquées dans les revendications dépendantes.

1. Préparation de verres

La première étape dans la fabrication des fibres est la synthèse de verres fluorés de haute qualité. Les verres doivent évidemment être homogènes, exempts d'infondus et de bulles, mais aussi ne contenir que de très faibles teneurs en oxygène et hydroxyles. Pour ces derniers, les tolérances sont très basses, de l'ordre de quelques ppb, ou même moins suivant la qualité de transmission optique que l'on souhaite atteindre vers 3 microns. La concentration en oxygène résiduel peut être plus élevée dans la mesure où il se trouve réparti de façon homogène dans la masse du verre. En effet, c'est la séparation de phase dans la masse et en surface qui est critique et non l'oxygène lui-même.

La préparation du verre peut être effectuée classiquement de deux façons: soit par fusion directe de fluorures anhydres, soit en deux étapes par fluoration des oxydes par le bifluorure d'ammonium $NH_5F_2$ suivie de la fusion de l'ensemble des constituants.

La première méthode implique que les fluorures de départ soient rigoureusement anhydres, ce qui à l'échelle de ppm ou de ppb n'est jamais réalisé. Ils doivent donc être préalablement déshydratés à une température aussi basse que possible pour éviter les phénomènes d'hydrolyse. Ceci peut être réalisé par chauffage sous vide et une combinaison convenable de la température de traitement, du vide réalisé et de la vitesse de pompage permettant l'élimination effective de l'eau moléculaire. Une autre possibilité consiste à chauffer la préparation avec un peu de bifluorure d'ammonium dont l'action fluorante inhibe l'hydrolyse, autorisant ainsi des températures et des pressions beaucoup plus élevées. On se trouve alors dans des conditions voisines de celles de la deuxème méthode qui utilise des oxydes comme produits de départ.

La réaction chimique entre les oxydes de zirconium, d'aluminium, de thorium, de terres rares et d'autres cations, d'une part, et le fluorure d'ammonium $NH_5F_2$, d'autre part, produit de l'eau en quantité notable. C'est seulement parce que la vapeur d'eau, du fait de sa tension de vapeur, s'élimine plus rapidement que l'excès de fluorure d'ammonium que cette réaction peut produit des fluorures de qualité acceptable. Toutefois, dans les conditions normales de réaction, on observe la présence d'oxygène et d'hydroxyle dans le produit final. Cette présence peut être sensiblement réduite si l'on réussit à diminuer la température et/ou la pression à laquelle s'effectue la fluoration. En effet, dans ce cas, l'hydrolyse est plus lente et plus limitée parce qu'une quantité maximale d'eau aura été éliminée à basse température, favorisant, suivant la loi des équilibres chimiques, la formation de fluorures aux dépens des oxyfluorures. La diminution de la température peut être réalisée au prix d'un allongement de la durée du traitement.

La fluoration ou la déshydratation des produits de départ sont effectuées par un chauffage prolongé au-dessous de 450°C, en présence de fluorure ou de bifluorure d'ammonium.

Avantageusement la fluoration est réalisée sous pression réduite. La diminution de la pression implique évidement la mise en oeuvre d'un système de pompage.

Après la fluoration, la température est élevée et le mélange porté à la fusion, l'enceinte étant maintenue sous atmosphère anhydre. Afin d'abaisser encore la concentration en hydroxyles résiduels, un traitement thermique est appliqué. A haute température, les hydroxyles s'éliminent spontanément avec départ de vapeur d'acide fluorhydrique HF conformément au schéma réactionnel:

$$F^- + OH^- \rightarrow O^{--} + HF$$

Une élévation de température accroît la cinétique de cette réaction en diminuant la viscosité du mélange fondu et en accélérant la diffusion des molécules gazeuses de HF à travers le liquide. Un inconvénient de cette méthode réside dans la volatilisation d'une partie du fluorure de zirconium qui se condense à la sortie du creuset sous forme de fumées blanches. Il y a donc lieu de modifier la composition de départ de la préparation afin de compenser cette perte. La température et la durée du traitement doivent être adaptées à la masse deverre et à la géométrie du creuset. Elles peuvent respectivement excéder 1000°C et une heure pour des verres de flourozirconate normaux. L'efficacité de cet affinage peut être accrue par la mise en oeuvre d'atmosphères réactives, telles que $CCl_4$, ainsi que proposé dans le brevet FR—A—2 478 619.

Dans le procédé décrit on évite cette procédure supplémentaire par une simple augmentation de la température d'affinage. L'atmosphère à la surface du liquide a une certaine incidence sur le niveau d'élimination des hydroxyles. Elle doit évidemment être anhydre. On peut utiliser des gaz neutres, mais la présence d'oxygène ne constitue pas un inconvénient. La réaction:

$$2F^- + \tfrac{1}{2}O_2 \rightarrow O^{--} + F_2$$

présente une énergie libre positive aux températures envisagées et, de ce fait, est inexistante en première approximation. Au contraire, l'influence réductrice des ions $NH_4^+$ au cours de la synthèse du verre peut

abaisser le degré d'oxydation d'une infime partie des cations, provoquant ainsi une coloration grisâtre de la masse vitreuse. Le fer, à l'état de traces, se retrouve au degré d'oxydation 2 et les métaux peu électropositifs, tels que l'étain ou le platine, à l'état de traces, peuvent même être réduits à l'état métallique. L'introduction limitée d'oxygène à haute température a pour effet de rétablir ces cations dans leur degré d'oxydation courant le plus élevé et ainsi d'éliminer ou de réduire les pertes optiques par absorption qu'ils pourraient induire.

Par ailleurs, l'élimination des molécules de HF à la surface du liquide ayant une incidence directe sur l'élimination des hydroxyles, il peut être avantageux de l'accélérer par un vide partiel ou par l'emploi d'un gaz favorisant la diffusion des molécules de HF. L'hélium convient bien à cette diffusion et présente, en outre, l'avantage de favoriser les transferts thermiques. Cette méthode de préparation et d'affinage du verre permet d'atteindre la qualité nécessaire à l'obtention de préformes.

2. Fabrication de préformes

Le premier procédé utilisé pour l'élaboration de préformes en verre fluoré est décrit dans le brevet FR—A—2 396 981, déjà mentionné. Il consistait à verser le verre en fusion dans un moule métallique préchauffé, puis, après un certain temps, à évacuer le coeur liquide. On versait ensuite le verre de coeur dans le tube de verre ainsi formé pour réaliser la structure classique coeur/gaine des fibres à saut d'indice. Dans sa forme primitive, ce procédé comporte plusieurs inconvénients. En premier lieu, le tube présente une certaine conicité interne due au fait que dans le moule, le verre versé le premier se trouve en bas et refroidit plus vite que celui qui est versé en haute du moule. D'autre part, la surface interne est exposée à la pollution de l'atmosphère pendant l'intrevalle de temps qui précède le coulage du verre de coeur, ce qui conduit à l'apparition fe nombreux défauts à l'interface coeur/gaine. Enfin, dans les conditions habituelles, on ne peut éviter la formation de bulles le long de l'axe du cylindre.

En ce qui concerne la conicité du coeur, deux solutions sont proposées pour obtenir des fibres à diamètre de coeur constants.

Suivant une première solution, la surface extérieure d'une préforme à coeur conique est rodée et polie de telle sorte que le rapport diamètre de coeur à diamètre de gaine—désigné dans la suite par RCG—soit constant sur toute la longueur de préforme servant au fibrage, puis la préforme est fibrée, le diamètre de la fibre étant mesuré et l'opération de fibrage contrôlée de manière à obtenir une fibre de diamètre constant.

Suivant une deuxième solution, il est prévu un moule de géométrie tronconique, ouvert vers le bas. Ainsi, la surface externe du verre de gaine est tronconique au lieu d'être cylindrique, mais sa surface interne est cylindrique. L'angle au sommet du tronc de cône du moule est choisi en fonction des caractéristiques des verres et notamment du verre de gaine. La surface extérieure de la préforme obtenue est, de préférence, rodée et polie de manière à obtenir une préforme de surface externe cylindrique.

3. Elimination des défauts d'interface

Suivant l'invention, les défauts à l'interface coeur/gaine peuvent être évités en effectuant toutes les opérations en atmosphère anhydre et, évidemment, exempte de poussières, suspensions et impuretés métalliques.

Une manière de procédé pour éviter les défauts à l'interface coeur/gaine consiste à utiliser un moule dans lequel on verse d'abord le verre de gaine, puis, au-dessus du verre de gaine, le verre de coeur. Quand on ouvre le fond du moule, la partie centrale du verre de gaine s'écoule, suivie de la partie centrale du verre de coeur. Quand toute la partie centrale du verre de gaine s'est écoulée, on arrête l'écoulement en refermant le fond du moule. On a alors une préforme avec un cylindre de verre de gaine entourant un noyau de verre de coeur. Toutes les opérations—coulages, ouverture du fond, fermeture—se déroulent en atmosphère anhydre, par exemple sous vide. On obtient ainsi une préforme exempte de défaut à l'interface gaine/coeur.

Une autre possibilité de réalisation de préforme à saut d'indice consiste à extruder du verre à son point de ramollissement à travers une filière dont l'orifice de sortie détermine le diamètre extérieur de la préforme. En pratique, on superpose au-dessus de la filière un disque en verre de coeur au-dessus d'un disque en verre de gaine. On chauffe, puis on presse l'ensemble des deux disques contre la filière au moyen d'un piston. Bien entendu, les faces en contact des deux disques doivent être bien propres.

4. Fabrication de coeurs de faibles diamètres.

Parmi les contraintes inhérentes à la fabrication de fibres optiques, celle du rapport entre les diamètres de coeur et de gaine est essentielle lorsqu'il s'agit de fabriquer des fibres monomode, ou, plus simplement, de réaliser de bonnes conditions de guidage optique.

Les méthodes décrites ci-dessus ne permettent pas de réaliser facilement des coeurs de faible dimension. Avantageusement, il est prévu de fabriquer d'abord une préforme de relativement grande section avec un rapport RCG égal au RCG définitif de la fibre. Cette préforme primaire est ensuite étirée en une préforme plus longue, mais de section réduite. De cette manière, le diamètre du coeur de la préforme étirée peut être inférieur à 2 ou 3 mm pour un diamètre de gaine 8 à 10 mm. Deux conditions essentielles sont requises pour réaliser cet étirage. Ce sont l'homogénéité et la stabilité de la température et une atmosphère anhydre et propre. La mise en oeuvre de l'étirage implique, suivant l'invention, le contrôle précis de ces deux paramètres.

5. Elimination des bulles

Avantageusement, il est également proposé, pour éviter la formation de bulles sur l'axe central, de fabriquer des préformes à partir de tubes qui sont ensuite rétreints sous vide ou en atmosphère anhydre et débarassée de poussières.

Ainsi, on propose de former deux ou plusieurs tubes concentriques d'indices de réfraction convenables, puis de rétreindre l'ensemble.

A cet effet, à titre d'exemple, on coule deux verres successivement dans un moule cylindrique préchauffé et tournant autour de son axe à une vitesse de rotation suffisante pour maintenir le verre liquide en couche régulière jusqu'à sa solidification. Il faut rappeler que l'on peut également utiliser la méthode précédemment décrite consistant à couler le verre de gaine, puis à laisser sa partie centrale s'écouler pendant que du verre de coeur vient la remplacer, en ajoutant ici une évacuation d'une partie du verre de coeur resté liquide.

Le tube obtenu par l'une des solutions qui viennent d'être décrites a généralement un diamètre interne relativement important. On chauffe localement ce tube à une température où le verre présente une viscosité convenable. Le tube se rètreint sous l'effet des forces de tension superficielles et son diamètre diminue fortement. En déplaçant la zone chauffante à vitesse constante le long du tube, on fait progresser la zone de rétreint. Si nécessaire, on effectue plusieurs rétreints successifs jusqu'à ce que le vide central disparaisse. On obtient ainsi une préforme sans bulle le long de son axe.

De préférence, pendant l'opération de rétreint qui vient d'être décrite, on fait tourner le tube pour éviter qu'il ne se déforme.

Par ailleurs, suivant l'invention, toute l'opération de rétreint s'effectue sous vide ou en atmosphère anhydre débarassée des poussières.

6. Fabrication de capillaires

Il faut encore noter que la machine de fibrage d'une préforme permet, non seulement d'obtenir des fibres quand on part de préformes en barreaux, mais également des tubes capillaires quand on part de préformes tubulaires. A noter encore qu'à partir d'une préforme tubulaire, on peut aussi obtenir directement une fibre en ajustant la température et le profile thermique du four de fibrage.

7. Fabrication d'éléments complexes

Suivant l'invention, il est également proposé d'assembler et/ou de façonner des barreaux, des tubes, des préformes, des fibres et des capillaires, afin d'obtenir des structures complexes, l'assemblage des composants élémentaires se faisant sous vide ou en atmosphère anhydre débarrassée des poussières, en chauffant tout ou partie de l'ensemble à une température convenable de telle sorte qu'à la périphérie des composants adjacents, les verres se confondent, les structures complexes ainsi obtenues étant ensuite étirées, rétreintes ou fibrées.

Bien entendu, une opération d'assemblage peut être concomitante d'une opération d'étirage, de rétreint ou de fibrage.

Description détaillée

On a décrit ci-dessus des méthodes permettant de fabriquer des fibres de verre fluorés, ainsi que des produits voisins, tels que capillaires, ou des produits intermédiaires, tels que préformes ou barreaux. Les caractéristiques de ces méthodes, ainsi que d'autres caractéristiques de l'invention, apparaîtront plus clairement à la lecture de la description suivante d'appareils utilisés pour mettre en oeuvre ces méthodes et d'exemples d'application de ces méthodes, ladite description étant faite en relation avec les dessins joints, parmi lesquels:

la Fig. 1 est une vue schématique en coupe d'une machine de fibrage suivant l'invention,

la Fig. 2 est une vue schématique illustrant une operation de rétrient,

les Figs. 3 à 8 montrent les diagrammes d'atténuation en fonction de la longueur d'onde, les mesures étant effectuées sur des fibres obtenues comme il est décrit dans les exemples chiffrés donnés dans la suite, et

la Fig. 9 montre schématique un cône de striction d'un composant complexe obtenu comme on le verra dans un exemple de mise en oeuvre.

La machine de fibrage de la Fig. 1 comprend, de haut en bas, un dispositif 1 d'accrochage de préforme, un four de fibrage 2, une filière 3, un four de polymérisation 4 et un tambour 5. Le four de fibrage 2 est constitué par une enceinte pratiquement étanche constituée de deux tubes en verre ou en silice 6 et 7 réunis par un soufflet métallique 8. Au-dessous du soufflet 8, le tube 7 est entouré d'un dispositif de chauffage 9. La base du tube 7 est fermée par un diaphragme 10 à travers laquelle passe la fibre 11 tirée de la préforme 12 suspendue au dispositif d'accrochage 1 par une tige 13. Le sommet du tube 6 est également fermé par une plaque qui comporte en son centre un passage étanche 14 dans laquelle la tige 13 peut descendre en y coulissant.

Dans l'exemple montré, le tube 6 comporte une tubulaire 15 permettant de faire de la vide dans l'enceinte ou d'y introduire un gaz de balayage, tel que de l'hélium qui est bon conducteur de la chaleur.

La filière 3 permet de revêtir la fibre 11 d'une enveloppe ou gaine de protection en polymère. Le gainage par polymère étant connu, on l'a simplement symbolisé par la présence de la filière 3.

Le soufflet 8 a pour objet de permettre un léger décalage des axes des tubes 6 et 7 de manière à ajuster le centrage de la fibre 11.

Il faut bien noter que le fibrage correct de la préforme 12 ne peut être réalisé que si l'enceinte 6-7-8 est exempte d'humidité et de poussières qui, comme on l'a mentionné dans le préambule, viennent altérer la surface du cône de striction.

Les fibres produites avec la machine de la Fig. 1, en faisant le vide dans le four 2, sont d'une excellente qualité. En utilisant de l'hélium comme gaz de balayage, on facilite le chauffage de la préforme 12, ce qui facilite le fibrage, mais on doit chercher à obtenir un courant gazeux constant autour de la préforme afin de ne pas altérer le centrage du fibrage.

Pour les opérations d'étirage de tube ou de rétreint, on doit placer l'ensemble des mandrins de maintien des pièces et le dispositif de chauffage à l'intérieur d'une enceinte qui doit également être mise sous vide ou balayée par un gaz adéquat.

A la Fig. 2, on a schématiquement montré comment est effectuée une opération de rétreint d'un tube 16 de verre fluoré. Les extrémités du tube 16 sont supposées tenues dans des mandrins, qui sont montés sur une machine capable de les déplacer en translation et de les faire tourner autour de l'axe qui les joint. Un four 17, par exemple in four à résistance, est disposé entre les mandrins et entoure annulairement le tube 16. Au cours de l'opération de chauffage, les forces de tension superficielles agissent et le tube se rétreint, c'est-à-dire que ses diamètres externe et interne, et plus particulièrement ce dernier, diminuent fortement. On déplace le tube 16 linéairement devant le four 17.

Selon les dimensions de départ, plusieurs passages peuvent être nécessaires pour obtenir un diamètre interne nul, comme montré en 18. A noter que, si l'on part d'un tube composé de verre de coeur et de verre de gaine, tel que celui qui est montré à la Fig. 2, le rapport final RCG dépend du rapport épaisseur de coeur à épaisseur de gaine initial.

L'ensemble de la machine, portant le tube 16, et du four 17 doivent être en atmosphère anhydre, débarassée de poussières et d'impuretés, soit sous vide, soit balayée par un gaz adéquat. L'opération de rétreint permet l'élimination des bulles.

Avec une machine analogue à celle qui vient d'être évoquée en relation avec la Fig. 2, on peut également étirer des tubes. Dans ce cas, les mandrins sont soumis à des forces qui tendent à les écarter. Bien entendu, le traitement est tel que le diamètre interne ne devient pas nul.

Dans les deux cas ci-dessus, la rotation des mandrins a pour effet d'éviter des déformations dues à un chauffage non rigoureusement réparti angulairement et, éventuellement, à la gravité.

Exemple 1

En pratique, l'exemple 1 concerne plusieurs essais dans lesquels on a fait varier les proportions molaires des constituants entre des limites que sont indiquées ci-après. Pour chaque essai, une masse de 10 g de verre de coeur a été préparée en mélangeant en pourcentage molaire: 52—58% de $ZrO_2$, 1—3% de $La_2O_3$, 26—32% de $BaF_2$, 2—5% de $ThO_2$, 1—2% de $Al_2O_3$, 2—12% de NaF et 20 g de $NH_5F_2$. L'ensemble a été chauffé pendant 2 heures à 400°C, puis porté à la fusion à une vitesse de chauffe de 10°C/mn. Une étape d'affinage a été réalisée en chauffant le verre liquide à 1000°C pendant 30 minutes. Le creuset a ensuite été refroidi à 600°C.

Une masse de 50 g de verre de gaine a été préparée suivant le même mode opératoire à partir de 54—60% de $ZrO_2$, 1—3% de $La_2O_3$, 28—35% de $BaF_2$, 1—3% de $Al_2O_3$ et 100 g de $NH_5F_2$.

Dans les deux cas, la synthèse a été effectuée en creuset de platine (hauteur 15 cm, diamètre 20 mm) et dans l'atmosphère anhydre d'une boîte à gants. Un dispositif d'extraction et de balayage permettait d'évacuer les vapeurs résultant de la réaction chimique et de la sublimiation de $NH_4F$.

Le verre de gaine a été coulé dans un moule de laiton de diamètre interne 10 mm, conduisant, après évacuation de la partie centrale non solidifée, à un tube de 2,5±0,5 mm d'épaisseur. Le verre de coeur a été immédiatement coulé à l'intérieur de ce tube, comme on l'a décrit ci-dessus dans le cas où on superpose dans une moule verre de coeur et verre de gaine. La pièce a ensuite été recuite durant 1 heure à 320°C. La préforme a ensuite été taillée à ses extrémités, puis rodée et polie extérieurement. Elle se présente alors sous la forme d'un cylindre de 50 mm de longueur.

Le fibrage de cette préforme a été réalisé dans une enceinte balayée par un courant d'hélium déshydraté de 2 l/mn. Le four de fibrage, à effet joule, a une zone chauffante de 3 cm et une puissance maximale de 200 W sous 80 V. Le fibrage s'effectue à 390°C, à une vitesse d'étirage de 15 m/mn. On obtient ainsi une fibre nue de 140 microns de diamètre extérieur pour un diamètre de coeur de 70 microns. Un enrobage par résine polymérisable aux U.V. à base de métacrylates (résine RIPOLIN PHOTOCRYL) est ensuite effectué en ligne, aboutissant à une fibre enrobée de 240 microns de diamètre. Une fibre d'une longueur totale de 250 mètres est ainsi obtenue.

La mesure des caractéristiques de transmission optique du tronçon central, sur une longueur de 60 m est reportée à la Fig. 3. On observe une décroissance de l'atténuation depuis le visble jusqu'à l'infra-rouge moyen. Le minimum d'atténuation se situe à 2,6 microns, tandis qu'une assez forte absorption se produit à 2.9 microns, en raison de la présence d'hydroxydes résiduels dans le verre.

Exemple 2

Suivant un mode opératoire similaire, un couple de verres de coeur et de gaine a été préparé. La

composition correspondant aux produits de départ était, (en % molaire):

| | $ZrF_4$ | $BaF_2$ | $LaF_3$ | $PbF_2$ | $ThF_4$ | $AlF_3$ | NaF |
|---|---|---|---|---|---|---|---|
| COEUR | 56 | 25 | 5 | 5 | 4 | 5 | |
| GAINE | 54 | 30 | 5 | 1 | 1 | 5 | 4 |

Après affinage à 400°C pendant 30 mn, les verres respectifs ont été coulés dans un dispositif en laiton recouvert d'une couche d'or sur toutes les parties en contact avec le verre, comme on l'a mentionné ci-dessus, le verre de coeur coulé au-dessus du verre de gaine, puis en enlevant pendant un certain temps le fond du moule. Le moule avait été préchauffé à 280°C au moment de la coulée. Une préforme de 10 mm de diamètre extérieur et de 60 mm de longueur a été obtenue, avec un rapport RCG de 0,5.

Le fibrage a été effectué avec le même système que celui de l'exemple 1, à une température de 390°C et une vitesse d'étirage de 15 m/mn. L'enrobage de la fibre a été réalisé avec une résine silicone (résine SYLGARD) polymérisée par passage dans un four de 0,8 m de long, chauffé à 370°C. La courbe des pertes spectrales sur un tronçon de 30 m de longueur est reportée à la Fig. 4. Un minimum d'atténuation de 220 db/km est observé à 2,4 microns.

Exemple 3

A partir des verres de coeur et de gaine dont les compositions ont été données dans l'exemple 2 et qui ont été préparés de la même façon, on a réalisé deux disques de verres d'épaisseur 6 mm et de diamètre 50 mm. On a placé ces deux disques l'un au-dessus de l'autre—le verre de coeur au-dessus—dans un dispositif d'extrusion. On les a chauffés à 340°C, on extrude l'ensemble à travers l'orifice d'une filière en acier inoxydable de forme appropriée et de diamètre 10 mm. Au cours de l'extrusion, une partie du verre du disque supérieur vient former le coeur de la préforme extrudée, dont le diamètre extérieur est éidemment de 10 mm et dont la longueur est de 150 mm.

Le fibrage est effectué de la même manière que dans l'exemple 2.

Exemple 4

Deux verres, dont les compositions sont données ci-dessous, sont synthétisés suivant le même code opératoire que dans les exemples précédentes:

| | $ZrF_4$ | $BaF_2$ | $LaF_3$ | $AlF_3$ |
|---|---|---|---|---|
| COEUR | 58 | 34 | 5 | 3 |
| GAINE | 56 | 34 | 5 | 5 |

L'affinage a été réalisé sous atmosphère d'argon commercial, contenant une faible quantité d'oxygène résiduel, mais déshydraté par un passage à travers des tamis moléculaires. La température a été stabilisée à 910°C durant 40 minutes. Le verre de gaine a été coulé dans un moule en laiton doré de 11 mm de diamètre, mais 120 mm de hauteur et une conicité de 5%. Après évacuation du coeur liquide et coulée, sous atmosphère sèche et propre, du verre de coeur, on obtient une préforme légèrement conique qui est rectifiée par rodage et polissage. Le diamètre du coeur est de 5±0,2 mm.

Le fibrage est effectué de la même façon que dans l'exemple 1. On obtient ainsi une fibre aux dimensions suivantes: 240 microns de diamètre extérieur, 150 microns de diamètre de gaine et 75 microns de diamètre de coeur. Les caractéristiques spectrales de cette fibre, mesurées sur 60 m, apparaissent à la Fig. 5.

Exemple 5

Deux verres de fluoroaluminate ont été préparée à partir des oxydes $Al_2O_3$, $ThO_2$, $BaF_2$, $Y_2O_3$ et du bifluorure $NH_5F_2$ en vue d'obtenir les compositions molaires suivantes, en %:

| | $AlF_3$ | $ThF_4$ | $BaF_2$ | $YF_3$ |
|---|---|---|---|---|
| COEUR | 25 | 22 | 25 | 28 |
| GAINE | 30 | 20 | 20 | 30 |

La fluoration a été effectuée à 400°C durant 2 heures, et l'affinage à 1000°C pendant 60 mn. Une préforme de 10 cm de longueur et 12 mm de diamètre a été obtenue par coulée du verre de gaine dans un moule en laiton doré préchauffé à 430°C, puis par évacuation du coeur liquide et coulée du verre de coeur.

Le fibrage a été réalisé à une température de 490°C sous flux d'hélium sec, avec un four de fibrage dont la zone chauffante active était de 4 mm. Les caractéristiques de transmission optique de la fibre obtenue sont rapportées à la Fig. 6.

Exemple 6

Un verre à base de fluorure de zinc a été préparé à partir des composés $ZnF_2$, $ThO_2$, $BaF_2$, $Y_2O_3$, $ZrO_2$ et du bifluorure $NH_5F_2$, dans les proportions nominales suivantes:

| $ZnF_2$ | $BaF_2$ | $YF_3$ | $ThF_4$ | $ZrF_4$ |
|---|---|---|---|---|
| 32,5 | 15 | 14 | 32,5 | 6 |

La synthèse de ce verre, portant sur 50 g environ, est effectué par chauffage à 400°C pendant 2 heures, puis le produit est affiné pendant 2 heures à 1000°C et enfin refroidi à 850°C et coulé. Un barreau de verre a été fabrique et le fibrage, réalisé avec le même four que précédemment décrit, mais à une température de 520°C, permet d'obtenir une fibre simple de 150 microns de diamètre. La courbe des pertes spectrales correspondantes est reportée à la Fig. 7.

Exemple 7

A partir des deux verres de l'exemple 1 et suivant le même ordre opératoire, une préforme primaire d'un diamètre de coeur de 12 mm, d'un diamètre de gaine de 24 mm et d'une longueur de 150 mm est obtenue par coulée du verre de coeur dans le tube de gaine. Cette préforme primaire est ensuite introduite dans une enceinte propre où elle est dégazée sous vide secondaire, puis chauffée dans sa partie centrale à 350°C sous atmosphère d'argon sec. Elle est ensuite étirée, dans un appareil d'étirage qui a été évoqué ci-dessus, jusqu'à ce que le diamètre extérieur atteigne 10 mm. La partie ainsi étirée est sectionnée et constitue la préforme secondaire au rapport RGC de 2.

Le fibrage et l'enrobage sont ensuite réalisés suivant la procédure de l'exemple 1. A une vitesse d'étirage de 15 m/mn, on obtient une fibre de 140 microns de diamètre extérieur et 70 microns de diamètre de coeur, avec la gaine extérieure en polymère. La courbe de transmission spectrale apparaît à la Fig. 8.

Exemple 8

A partir du couple de verres de l'exemple 1, synthétisé suivant le même mode opératoire, on a d'abord réalisé un tube de verre de gaine d'un diamètre extérieur de 16 mm et de 5 mm d'épaisseur. Ce tube à ensuite été étiré, dans un appareil d'étirage évoqué ci-dessus, à une température de 350°C, suivant la procédé décrite dans l'exemple précédent, jusqu'à l'obtention d'un tube de 15 mm de diamètre et de 2 mm d'épaisseur. Celui-ci est transfére sous atmosphère sèche dans une enceinte propre où il est alors rempli avec le verre de coeur.

Après fibrage, en ambiance neutre et propre, on obtient une fibre optique de diamètre de gaine de 240 mm avec un rapport RGC très voisin de 1, ce qui augmente ainsi notablement la section utile de la fibre, et par l'à-même le flux lumineux qu'elle peut véhiculer.

Exemple 9

A partir du couple de verres de l'exemple 1, on a préparé un tube de 20 mm de diamètre extérieur. Le verre de gaine a été coulé sous une épaisseur de 4 mm et celui du coeur sous une épaisseur de 2 mm, en utilisant un procédé de centrifugation au moment de la coulée. Le tube ains obtenu a été chauffé à 390°C, puis étiré sous atmosphère anhydre et propre jusqu'à obtention d'un tube de 15 mm de diamètre extérieur et 4,6 mm de diamètre intérieur. Ce dernier tube a ensuite été étiré sous forme d'une fibre capillaire d 65 microns de diamètre extérieur et de 20 microns de diamètre intérieur.

Exemple 10

En exemple de structure complexe, on a assemblé, en atmosphère anhydre et sans poussière, 675 fibres optiques en verres fluorés de diamètre de gaine 800 microns pour donner une préforme cylindrique de diamètre extérieur 20 mm, environ. Cette préforme a ensuite été étirée en une fibre de 500 microns de diamètre.

Exemple 11

A la Fig. 9, on a montré le cône de striction et l'amorce d'une fibre 19 obtenue à partir d'un composant complexe constitué de 12 fibres optiques à saut d'indice 20 entre lesquelles ont été disposées 9 fibres simples 21, l'assemblage ayant été effectué comme décrit dans l'exemple 10.

Bien entendu, tout composant de structure complexe peut être utilisé comme élément d'une structure de complexité plus grande. Il est également clair que ces composants peuvent être façonnés suivant les techniques verrières traditionnelles pour former notamment des disques, des prismes, des lentilles et des composants optiques à structure complexe.

Conclusions

Les fibres et composants optiques suivant l'invention peuvent être utilisés pour un nombre important d'applications mettant en jeu les télécommunications, les transferts de données, l'imagerie et les systèmes infra-rouge, la télédétection et les capteurs à fibres optiques, le transfert de puissance, etc.

L'utilisation de fibres optiques en verre fluoré à une longueur d'onde supérieure à 2 microns présente

l'avantage d'une relative insensibilité aux radiations ionisantes (neutrons, rayons alpha, béta et gamma) qui affectent de façon très sensible les caractéristiques optiques des fibres en verres d'oxyde. Elle est de ce fait adaptée au contrôle de transfert de données en zone radioactive.

Les composants optiques en verre fluoré, sous forme de fibres, rubans, cônes et faisceaux, permettent d'alléger et de simplifier la conception des systèmes de détection infra-rouge. Il est par exemple possible d'exécuter le transfert, le codage et le décodage d'une image infra-rouge entre le plan focal et le détecteur. Ce dernier, habituellement refroidi à basse température, est relativement statique, tandis que l'optique infra-rouge peut être mobile.

Ces mêmes composants peuvent être couplés à des lasers opérant dans l'infra-rouge moyen, tels que les lasers HF et DF, pour transférer à partir d'une même source une puissance optique notable dans des zones différentes et/ou d'accès difficile.

L'invention concerne essentiellement les verres dérivé des fluorures de métaux lourds, tels que les fluorozirconates, les fluorohafnates, les fluoroaluminates, les fluorozincates, les fluorures de métaux de transition, de lanthanides ou d'actinides. Ces verres peuvent être enrichis avec des halogénures lourds—chlorures, bromures, iodures—jusqu'à une concentration de 10% en moles, sans modification des procédés.

Les procédés décrits s'appliquent, en particulieur, aux verres contenant plus de 30% en moles de $ZrF_4$ ou $HfF_4$, ou plus de 15% de $AlF_3$, ou plus de 20% de $ZnF_2$, ou d'un fluorure de métal de transition 3d, ou plus de 25% de $UF_4$, de $ThF_4$ ou d'un fluorure de terre rare, ces exemples étant donnés à titre indicatif et nullement limitatif. On exclut cependant du champ de l'invention les verres contenant une proportion notable de vitrificateurs oxygénés, tels que $SiO_2$, $B_2O_3$, $GeO_2$ et $P_2O_5$.

**Revendications**

1. Procédé de fabrication de fibres et composants optiques en verres fluorés à partir de barreaux et de préformes consistant en l'élaboration de préformes de qualité optique à partir de verres de haute pureté et en l'étirage ou le fibrage desdites préformes en fibres optiques, caractérisé en ce que ces opérations sont effectuées en atmosphère exempte d'humidité, de poussières et de vapeurs organiques, métalliqus ou minérales.

2. Procédé de fabrication suivant la revendication 1 caractérisé en ce que les opérations d'élaboration de préforme, d'étirage et de fibrage sont effectuées sous vide.

3. Procédé de fabrication suivant la revendication 1, caractérisé en ce que les opérations d'élaboration de préforme, d'étirage et de fibrage sont effectuées en atmosphère d'hélium.

4. Procédé de fabrication de fibres optiques en verres fluorés suivant l'une des revendications 1 à 3, la préforme étant obtenue en versant le verre de gaine dans un moule de révolution, puis en évacuant le coeur resté liquide et en versant au centre du tube ainsi formé le verre de coeur, caractérisé en ce que le moule de révolution est légèrement conique.

5. Procédé de fabrication de fibres optiques en verres fluorés suivant l'une des revendications 1 à 3, caractérisé en ce que la préforme est obtenue en versant le verre de gaine dans la partie inférieure d'un moule préchauffé et le verre de coeur dans sa partie supérieure, puis en ouvrant le fond du moule de manière que le verre de coeur soit transféré à l'intérieur du tube de verre de gaine, en remplaçant le verre de gaine liquide qui s'est échappe par le fond du moule.

6. Procédé de fabrication de fibres optiques en verres fluorés suivant l'une des revendications 1 à 3, caractérisé en ce que la préforme est obtenue en extrudant simultanément le verre de coeur et le verre de gaine, à l'état pâteux à travers un orifice à la dimension de la préforme à obtenir.

7. Procédé de fabrication de fibres optiques en verres fluorés suivant l'une des revendications 5 ou 6, caractérisé en ce que la préforme est rectifiée et polie extérieurement afin de garder le même rapport entre les diamètres du coeur et de la gaine sur toute la longueur servant au fibrage.

8. Procédé de fabrication de fibres et composants optiques en verres fluorés suivant l'une des revendications 1 à 7, caractérisé en ce qu'il s'applique à des verres de fluorozirconates, fluorozincates, fluoroaluminates, ou à des verres dérivés des fluorures de métaux de transition, de lanthanides ou d'actinides.

9. Procédé de fabrication de fibres optiques en verres fluorés suivant l'une des revendications 1 à 8, caractérisé en ce que le système de chauffage permettant le fibrage ou l'étirage consiste en un flux de gaz chaud.

10. Procédé de fabrication de fibres optiques en verres fluorés suivant l'une des revendications 1 à 3, caractérisé en ce que la préforme ou le tube sont obtenues par rétreint d'un tube de diamètre plus important.

11. Procédé de fabrication de fibres optiques en verres fluorés suivant la revendication 10, caractérisé en ce que la préforme est un tube (16) en verre fluoré dont les extrémités sont maintenues dans des mandrins déplaçables et translation et en rotation autour de l'axe que les joint, un four (17) étant disposé entre les mandrins et entourant annulairement le tube (16), le tube (16) étant déplacé linéairement en tournant le four (17) à l'aide desdits mandrins.

12. Procédé de fabrication de fibres optiques en verres fluorés suivant la revendication 10, caractérisé en ce que la préforme est obtenue à partir d'un tube fabriqué en coulant les différentes couches de verres

dans un moule cylindrique animé d'un mouvement de rotation autour de sa génératrice.

13. Procédé de fabrication de fibres optiques en verres fluorés suivant l'une des revendications 1 à 12, caractérisé en ce que la préforme ou le tube servant à fabriquer la préforme sont obtenus par étirage d'une préforme ou d'un tube de diamètre plus important.

14. Procédé de fabrication de guide d'onde en verres fluorés à structure complexe suivant l'une des revendications 1 à 3, caractérisé en ce qu'il consiste en un barreau à structure complexe obtenu par fusion superficielle de fibres élémentaires, tubes, ou préformes, et en l'étirage de ce barreau.

15. Procédé de fabrication de préformes à structure complexe en verres fluorés, suivant l'une des revendications 1 à 3, caractérisé en ce qu'il est fabriqué en assemblant barreaux, tubes, préformes, fibres, capillaires, fabriqués suivant l'une des revendications 1 à 15, l'assemblage étant obtenu par fusion superficielle des composants adjacents.

16. Procédé de fabrication de composants optiques en verres fluorés, caractérisé en ce qu'il est obtenu en étirant, rétreignant ou fibrant des composants suivant la revendication 14 ou 15.

17. Procédé de fabrication suivant l'une des revendications 1 à 16, caractérisé en ce que lesdits verres de haute pureté sont fabriqués à partir de fluorures qui sont mélangés avec chauffage prolongé au-dessous de 450°C en présence de fluorure ou de bifluorure d'ammonium, le mélange fondu obtenu étant ultérieurement affiné en le portant à haute température, ces diverses opérations étant réalisées en atmosphère anhydrde.

18. Procédé de fabrication suivant l'une des revendications 1 à 16, caractérisé en ce que lesdits verres de haute pureté sont fabriqués par fluoration d'oxydes métalliques avec un chauffage prolongé au-dessous de 450°C en présence de fluorure ou de bifluorure d'ammonium, le mélange fondu étant ultérieurement affiné en le portant à haute température, ces diverses opérations étant réalisées en atmosphère anhydre.

19. Procédé de fabrication suivant la revendication 17 ou 18, caractérisé en ce que lesdites opérations sont réalisées sous pression réduite.

20. Procédé de fabrication suivant la revendication 17 ou 18, caractérisé en ce que l'atmosphère au-dessus du matériau en cours de traitement contient entre 1 et 25% d'oxygène.

**Patentansprüche**

1. Verfahren zur Herstellung von Fasern und optischen Komponenten in Fluorglas aus Streifen und Formen mit einer Verarbeitung von Vorformen optischer Qualität aus einem Glas hoher Reinheit und einer Streckung oder Faserbildung der genannten Vorformen in optische Fasern, dadurch gekennzeichnet, daß diese Vorgänge in einer Atmosphäre ausgeführt werden, die frei von Feuchtigkeit, von Staub und von organischen, metallischen oder mineralischen Dämpfen ist.

2. Verfahren zur Herstellung nach Anspruch 1, dadurch gekennzeichnet, daß die Vorgänge der Verarbeitung der Vorformen, der Streckung und der Faserbildung in Vakuum durchgeführt werden.

3. Verfahren zur Herstellung nach Anspruch 1, dadurch gekennzeichnet, daß die Vorgänge der Verarbeitung der Vorformen, der Streckung und der Faserbildung in einer Atmosphäre aus Helium durchgeführt werden.

4. Verfahren zur Herstellung optischer Fasern in Fluorglas nach einem der Ansprüche 1—3, wobei die Vorform dadurch erzeugt wird, daß das Randglas in eine Drehform eingebracht wird, sodann der flüssig gebliebene Kern entfernt und das Kernglas in das Zentrum der so gebildeten Röhre gebracht wird, dadurch gekennzeichnet, daß die Drehform leicht konisch ist.

5. Verfahren zur Herstellung von optischen Fasern in Fluorglas nach einem der Ansprüche 1—3, dadurch gekennzeichnet, daß die Vorform dadurch gewonnen wird, daß das Randglas in den unteren Teil der vorgeheizten Form eingebracht wird und das Kernglas in dessen oberen Teil, daß dann der Boden der Form derart geöffnet wird, daß das Kernglas in das Innere der Röhre aus dem Randglas gebracht wird und dadurch das flüssige Randglas, das über den Boden der Form entwichen ist, ersetzt.

6. Verfahren zur Herstellung von optischen Fasern in Fluorglas nach einem der Ansprüche 1—3, dadurch gekennzeichnet, daß die Vorform dadurch gebildet wird, daß gleichzeitig das Kernglas und das Randglas im teigartigen Zustand über eine Öffnung an der Dimension der zu bildenden Vorform ausgestoßen wird.

7. Verfahren zur Herstellung optischer Fasern in Fluorglas nach einem der Ansprüche 5 oder 6, dadurch gekennzeichnet, daß die Vorform an ihrer Außenseite korrigiert und poliert ist, damit über die gesamte zur Faserbildung dienende Länge dasselbe Verhältnis zwischen dem Durchmesser des Kerns und dem Durchmesser des Randes eingehalten ist.

8. Verfahren zur Herstellung von fasern und optischen Komponenten in Fluorglas nach einem der Ansprüche 1—7, dadurch gekennzeichnet, daß es bei fluorozirconaten, fluorozincaten, fluoroaluminaten Gläsern oder bei Gläsern angewendet wird, die aus lanthaniden oder actiniden Übergangsmettalen abgeleitet sind.

9. Verfahren zur Herstellung von optischen Fasern in Fluorglas nach einem der Ansprüche 1—8, dadurch gekennzeichnet, daß das Heizsystem, das die Faserbildung oder die Streckung ermöglicht, aus einem Fluß heißen Gases besteht.

10. Verfahren zur Herstellung optischer Fasern in Fluorglas nach einem der Ansprüche 1—3, dadurch

gekennzeichnet, daß die Form oder die Röhre durch Aushöhlung einer Röhre mit größerem Durchmesser gebildet ist.

11. Verfahren zur Herstellung optischer Fasern in Fluorglas nach Anspruch 10, dadurch gekennzeichnet, daß die Form eine Röhre (16) aus Fluorglas ist, deren Enden in Spannfuttern gehaltert sind, die durch eine Translationsbewegung und eine Rotationsbewegung um die sie verbindende Achse verstallbar sind, daß zwischen den Spannfuttern ein die Röhre (16) ringförmig umgebender Ofen vorgesehen ist knd daß die Röhre (16) durch die genannten Spannfutter vor dem Ofen (17) rotierend linear verstellbar ist.

12. Verfahren zur Herstellung von optischen Fasern in Fluorglas nach Anspruch 10, dadurch gekennzeichnet, daß die Vorform aus einer Röhre gewonnen ist, die dadurch hergestellst ist, daß verschiedene Schichten aus Glas in eine zylindrische Form gebracht werden, die in eine Rotationsbewegung um ihre Ursprungslinie gebracht wird.

13. Verfahren zur Herstellung optischer Fasern in Fluorglas nach einem der Ansprüche 1—12, dadurch gekennzeichnet, daß die Vorform oder die Röhre, die zur Herstellung der Form dient, durch Streckung einer Form oder einer Röhre mit größerem Durchmesser gewonnen wird.

14. Verfahren zur Herstellung von Wellenführungen für Fluorglas mit komplexem Aufbau nach einem der Ansprüche 1—3, dadurch gekennzeichnet, daß es aus einem Streifen mit komplexem Aufbau besteht, der durch eine Oberflächenfusion elementarer Fasern, Röhren oder Vorformen und aus einer Streckung dieses Streifens besteht.

15. Verfahren zur Herstellung von Vorformen mit komplexem Aufbau in Fluorglas nach einem der Ansprüchen 1—3, dadurch gekennzeichnet, daß es aus einem Zusammenfügen von Streifen, Röhren, Vorformen, Fasern, Kapillaren besteht die nach einem der Ansprüche 1—15 hergestellt sind, wobei das Zusammenfügen duruch eine Oberflächenfusion der aneinanderliegenden Komponenten bewirkt ist.

16. Verfahren zur Herstellung von optischen Komponenten in Fluorglas, dadurch gekennzeichnet, daß es durch Strekkung, Zusammenziehen oder Faserbildung der Komponenten gemäß den Ansprüchen 14 und 15 erreicht ist.

17. Verfahren zur Herstellung nach einem der Ansprüche 1—16, dadurch gekennzeichnet, daß die genannten Gläser hoher Reinheit aus Fluoriden hergestellt sind, die bei längerem Aufheizen unterhalb 450°C in den Anwesenheit von Fluorid oder Ammoniumbifluorid vermischt werden, wobei die geschmolzene Mischung anschließend dadurch raffiniert wird, daß sie auf eine hohe Temperatur gebracht wird, wobei die verschiedenen Vorgänge in einer wasserfreien Atmosphäre durchgeführt werden.

18. Verfahren zur Herstellung nach einem der Ansprüche 1—16, dadurch gekennzeichnet, daß die genannten Gläser mit hoher Reinheit durch Fluorisation von metallischen Oxiden bei einem längern Aufheizen unterhalb 450°C bei Anwesenheit von Fluoriden oder Ammoniumbifluoriden hergestellt werden, wobei die geschmolzene Mischung anschließend dadurch raffiniert wird, daß sie auf eine hohe Temperatur gebracht wird, und diese verschiedenen Vorgänge in einer wasserfreien Atmosphäre durchgeführt werden.

19. Verfahren zur Herstellung nach Anspruch 17 oder 18, dadurch gekennzeichnet, daß die genannten Vorgänge bei verringertem Druck durchgeführt werden.

20. Verfahren zur Herstellung nach Anspruch 17 oder 18, dadurch gekennzeichnet, daß die Atmosphäre oberhalb des Materials im Verlauf der Behandlung zwischen 1% und 25% Sauerstoff enthält.

**Claims**

1. A process of manufacture of optical fibers and components of fluoride glasses from bars and moulds consisting of the preparation of optical quality moulds from high purity glass and in the stretching or fibering of the said mould into optical fibres, characterized in that these operations are carried out in atmosphere free of humidity, dusts and organic, metallic or mineral vapours.

2. A process of manufacture according to Claim 1, characterized in that the mould, stretching and fibering preparation operations are carried out in a vacuum.

3. A process of manufacture according to Claim 1, characterized in that the mould, stretching and fibering preparation operations are carried out in a helium atmosphere.

4. A process of manufacture of optical fibres of fluoride glasses according to one of the Claims 1 to 3, the mould being obtained by pouring the sheath glass into a revolving mould then removing the core which has remained liquid and pouring at the centre of the tube thus formed, the core glass, characterized in that the revolving mould is slightly conical.

5. A process of manufacture of fluoride glass optical fibres according to one of the Claims 1 to 3, characterized in that the mould is obtained by pouring the sheath glass into the lower part of the preheated mould and the core glass into its upper part then opening the bottom of the mould such that the core glass is transferred to the inside of the sheath glass tube by replacing the liquid sheath glass which has escaped through the bottom of the mould.

6. A process of manufacture of fluoride glass optical fibres according to one of the Claims 1 to 3, characterized in that the mould is obtained by simultaneously extruding the core glass and the sheath glass in the pasty state through an orifice of the dimension of the mould to be obtained.

7. A process of manufacture of fluoride glass optical fibres according to one of the Claims 5 or 6, characterized in that the mould is corrected and polished externally in order to keep the same ratio between

the core diameter and the sheath diameter over the whole length serving for the fibering.

8. A process of manufacture of fluoride glass optical fibres and components according to one of the Claims 1 to 7, characterized in that it is applied to fluorozirconate, fluorozincate, fluoraluminate glasses or to glasses derived from transition metal fluorides, lanthamides or actinides.

9. A process of manufacture of fluoride glass optical fibres according to one of the Claims 1 to 8, characterized in that the system of heating permitting the fibering or stretching consists of a flow of hot gas.

10. A process of manufacture of fluoride glass optical fibres according to one of the Claims 1 to 9, characterized in that the mould or the tube is obtained by contraction of a tube of larger diameter.

11. A process of manufacture of fluoride glass optical fibres according to Claim 10, characterised in that the mould is a fluoride glass tube (16) whose ends are held in chucks capable of being displaced by a movement of translation and rotation around the axis connecting them, an oven (17) being disposed between the chucks and surrounding annularly the tube (16), the tube (16) being displaced linearly rotating in front of the oven (17) with the aid of the said chucks.

12. A process of manufacture of fluoride glass optical fibres according to Claim 10, characterized in that the mould is obtained from a tube made by pouring different layers of glasses into a cylindrical mould actuated by a movement of rotation around its generating line.

13. A process of manufacture of fluoride glass optical fibres according to one of the Claims 1 to 12, characterized in that the mould or the tube serving to make the mould are obtained by stretching a mould or a tube of larger diameter.

14. A process of manufacture of complex structured fluoride glass wave guides according to one of the Claims 1 to 3, characterized in that it consists of a complex structured bar obtained by surface fusion of elementary fibres, tubes or moulds and stretching the bar.

15. A process of manufacture of complex structured fluoride glass moulds according to one of the Claims 1 to 3, characterized in that it is made by assembling bars, tubes, moulds, fibres, capillaries made according to one of the Claims 1 to 15, the assembly being obtained by surface fusion of the adjacent components.

16. A process of manufacture of fluoride glass optical components, characterized in that it is obtained by stretching, contracting or fibering the components according to Claim 14 or 15.

17. A process of manufacture according to one of the Claims 1 to 16, characterized in that the said glasses of high purity are made from fluorides which are mixed with prolonged heating below 450°C in the presence of fluoride or ammoniumbifluoride, the molten mixture being subsequently refined by bringing it to a high temperature, the various operations being carried out in anhydrous atmosphere.

18. A process of manufacture according to one of the Claims 1 to 16, characterized in that the said glasses of high purity are made by fluorization of metallic oxides with a prolonged heating below 450°C in the presence of fluoride or ammoniumbifluoride, the molten mixture being subsequently refined by bringing it to a high temperature these various operations being carried out in anhydrous atmosphere.

19. A process of manufacture according to Claim 17 or 18, characterized in that the said operations are carried out under reduced pressure.

20. A process of manufacture according to Claim 17 or 18, characterized in that the atmosphere above the material in the course of treatment contains between 1 and 25% oxygen.

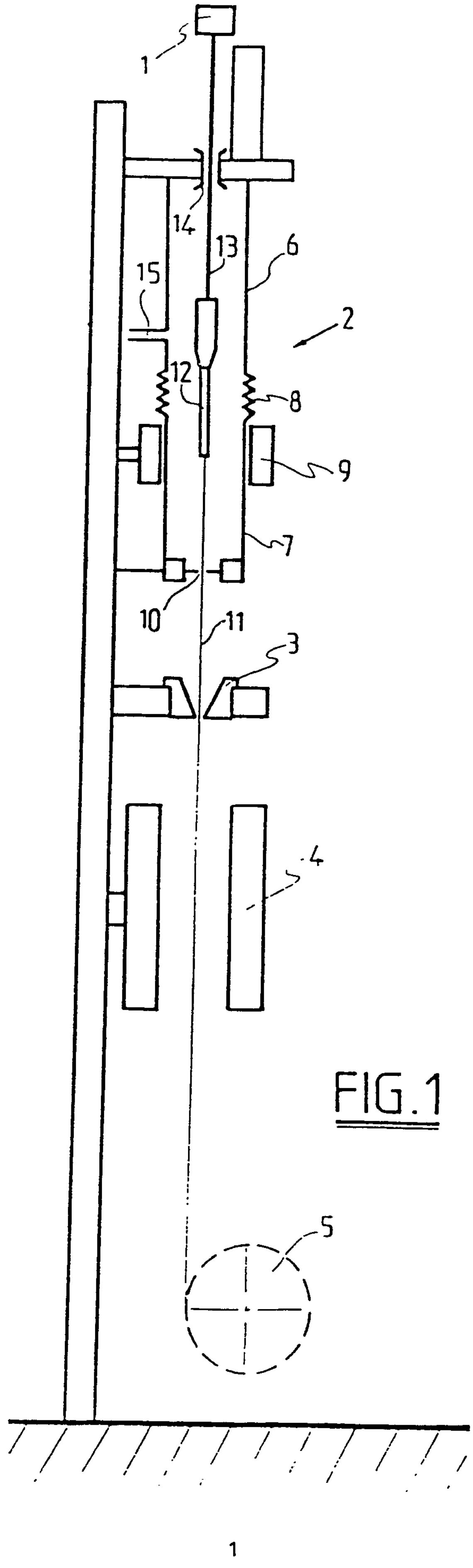


FIG.1

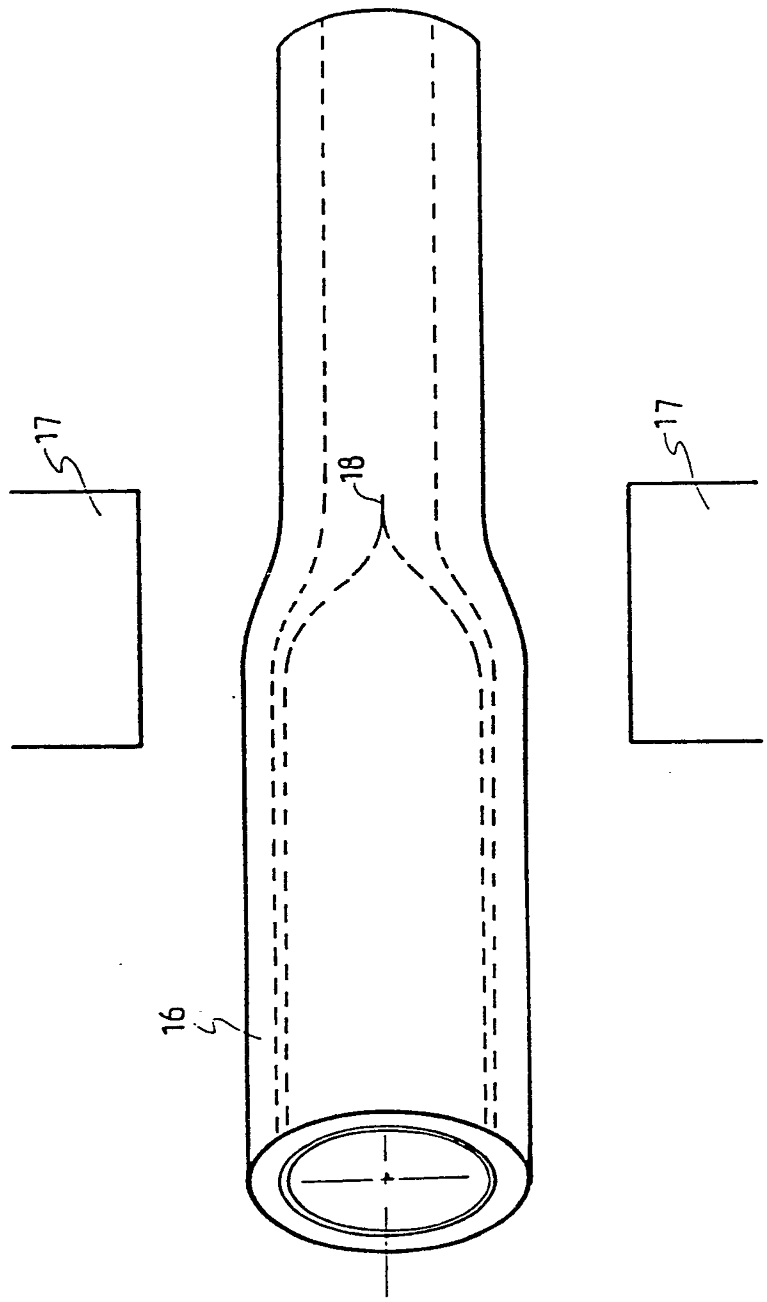


FIG.2

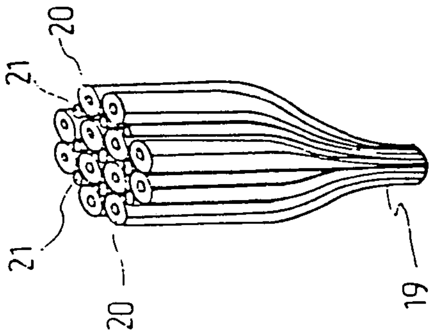


FIG.9

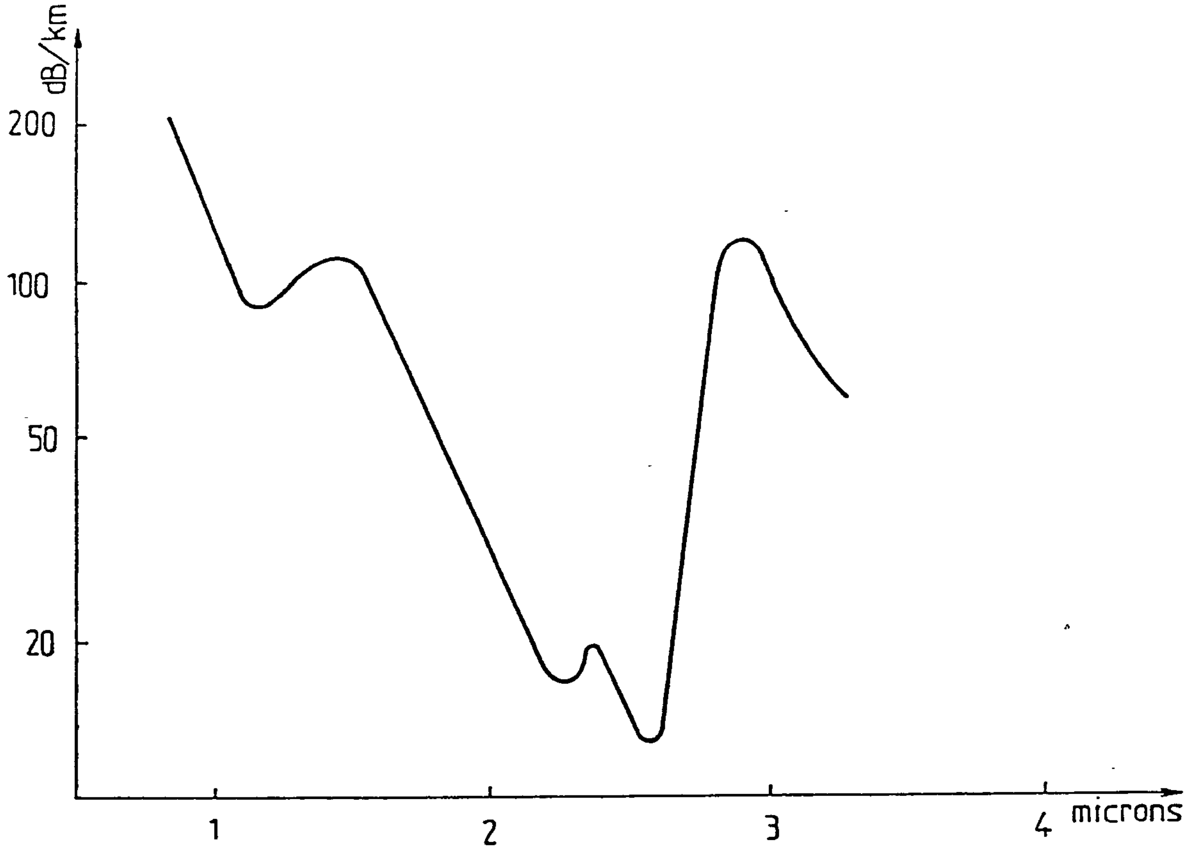
dB/km
200
100
50
20
1
2
3
4
microns

FIG. 4

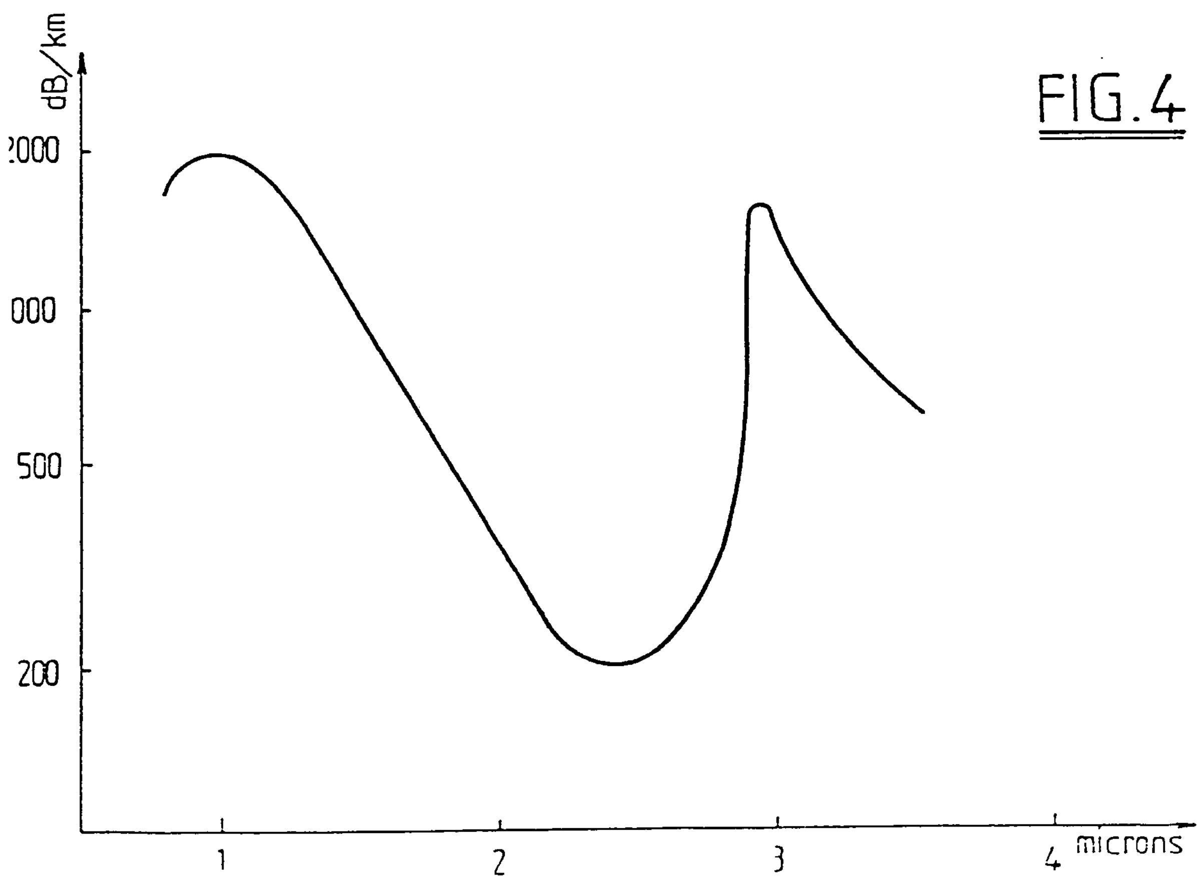
dB/km
2000
1000
500
200
1
2
3
4
microns

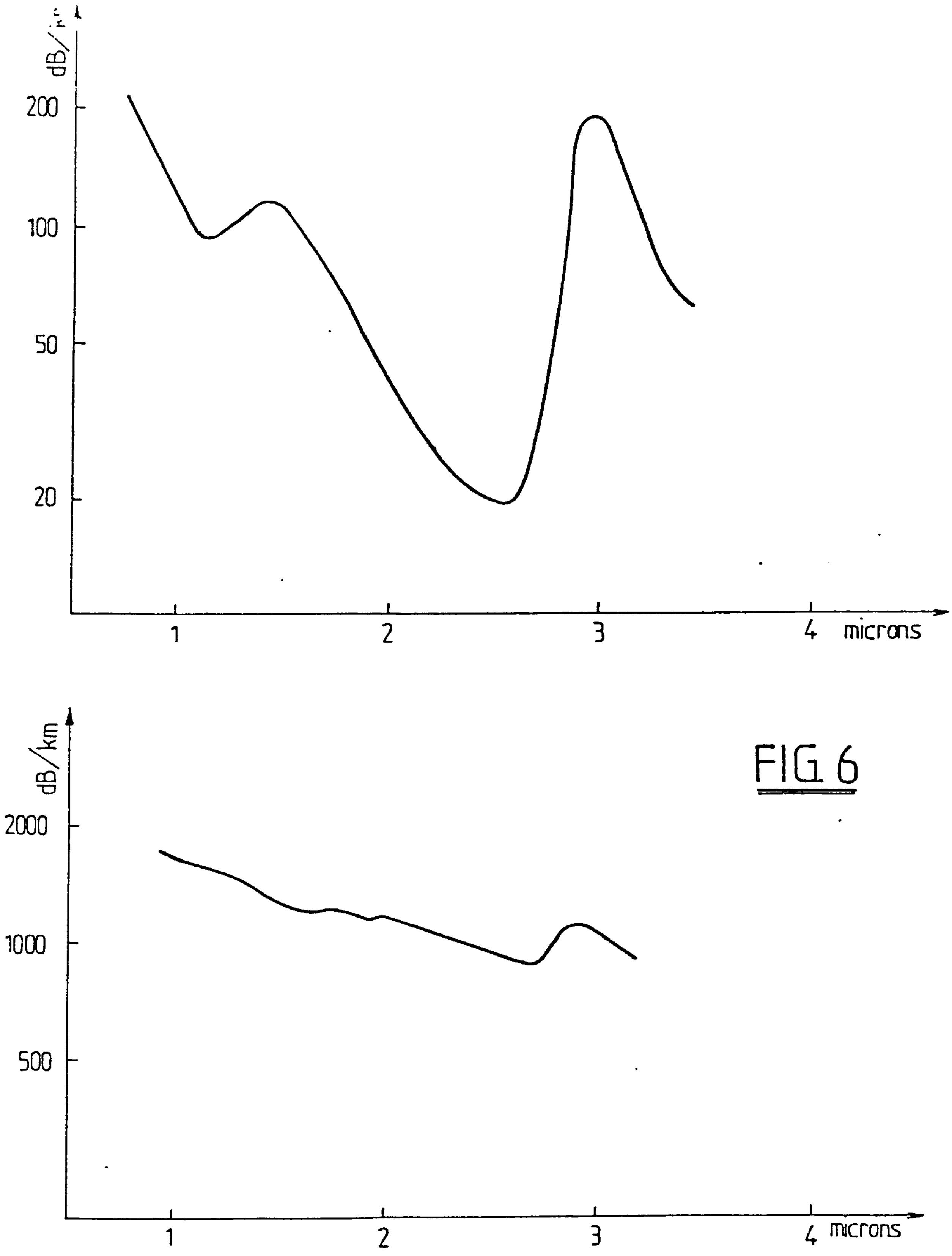
dB/km
200
100
50
20
1
2
3
4
microns
dB/km
2000
1000
500
1
2
3
4
microns

FIG 6

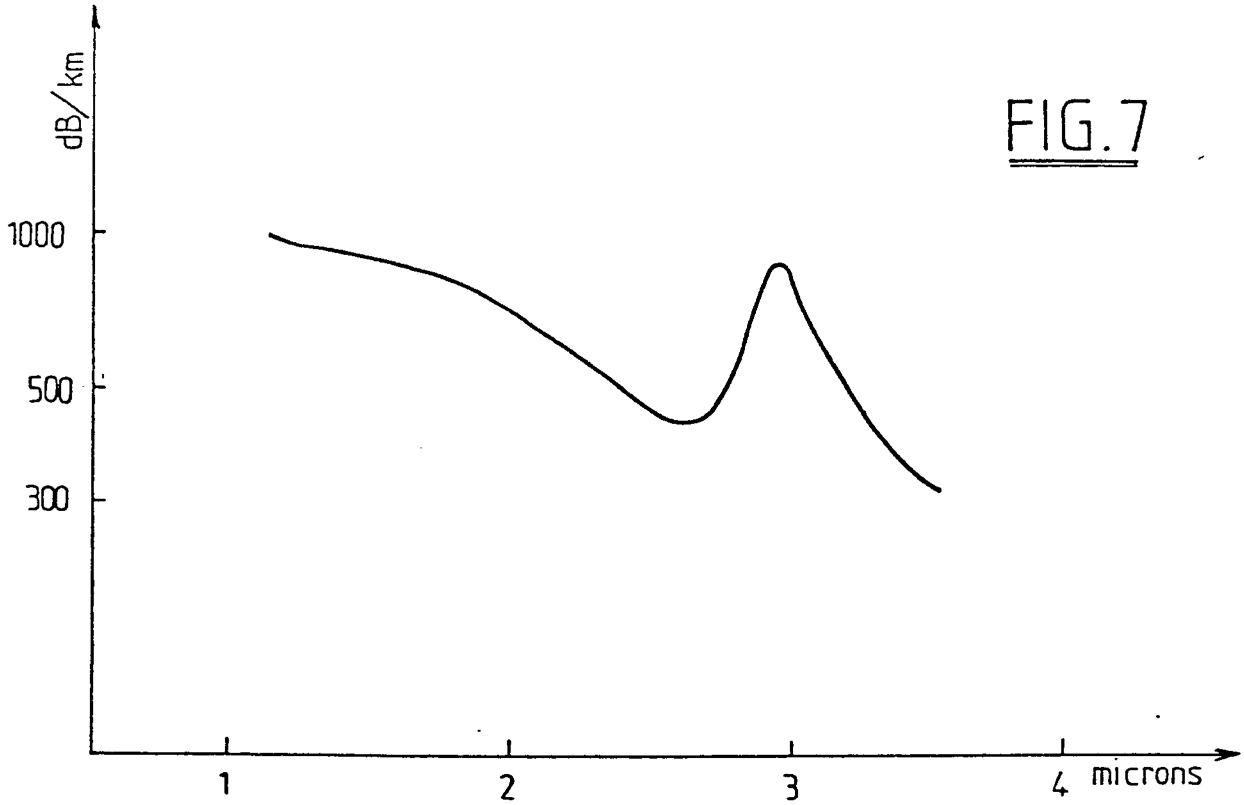
dB/km
1000
500
300
1
2
3
4
microns

FIG.7

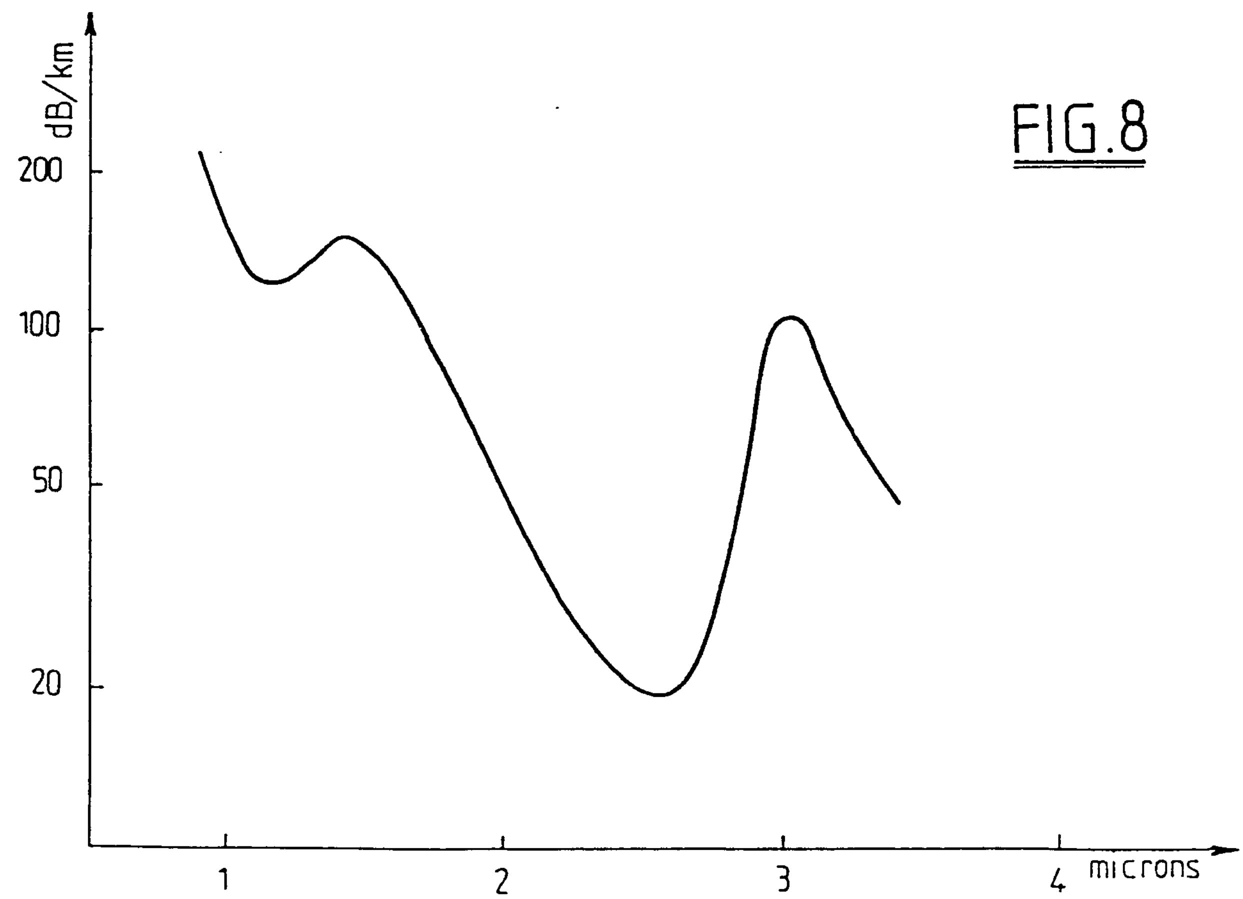
dB/km
200
100
50
20
1
2
3
4
microns

FIG.8